# EUROPEAN PATENT SPECIFICATION

(11) **EP 3 950 343 B1**
(45) Date of publication and mention of the grant of the patent: **07.05.2025**
(21) Application number: 20783989.5
(22) Date of filing: 26.03.2020
(51) Int. Cl.: B44C 1/17, B32B 27/20, B32B 7/06, B32B 3/18, B29C 45/14, B44F 1/02

(54) **TRANSFER SHEET AND METHOD FOR MANUFACTURING DECORATIVE MOLDING**
TRANSFERFOLIE UND VERFAHREN ZUR HERSTELLUNG EINES DEKORATIVEN FORMTEILS
FEUILLE DE TRANSFERT ET PROCÉDÉ DE FABRICATION D'UN MOULAGE DÉCORATIF

(30) Priority: 29.03.2019 JP 2019069065
(43) Date of publication of application: 09.02.2022
(73) Proprietor: Dai Nippon Printing Co., Ltd., Tokyo 162-8001 (JP)
(72) Inventor: NODA, Akihisa, Tokyo 162-8001 (JP); OOTA, Naoki, Tokyo 162-8001 (JP); SAKONAKA, Kazuyuki, Tokyo 162-8001 (JP); NAKATSUGAWA, Yuji, Tokyo 162-8001 (JP)
(74) Representative: Beck Greener LLP
(86) International application number: PCT/JP2020/013711
(87) International publication number: WO 2020/203661

(56) References cited:
- WO-A1-2014/083851
- WO-A1-2014/083851
- JP-A- 2014 104 705
- JP-A- 2017 154 462
- JP-A- 2017 154 462
- JP-A- H05 138 736
- JP-A- H05 138 736
- JP-A- S60 264 214
- JP-A- S60 264 214

## Description

### Technical Field

This invention relates to a transfer sheet and a method for producing a decorative molded article with the transfer sheet.

### Background Art

Conventionally, in the fields such as household electric appliances, automobile interior parts, and miscellaneous goods, high functionality and design decorativeness have been exhibited by decorating the surface of the product with, for example, characters and patterns. A transfer method is known as a method of decorating the surface of a product. The transfer method is a method of decoration by using a transfer sheet having a transfer layer including, for example, a release layer, a pattern layer, and an adhesive layer formed on a substrate, heating and pressurizing to bring the transfer sheet into close contact with the object to be transferred, peeling off the substrate, and transferring only the transfer layer to the surface of the object to be transferred.

For products that are required to have matt feeling as a design, a transfer sheet provided with a matting layer having fine unevenness is used for decoration. PTL1, PTL2 and PTL3 disclose methods for producing a molded article with different matt feeling on a portion of its surface by using a transfer sheet with a matting layer provided on a portion of the substrate.

### Citation List

### Patent Literature

PTL1: Japanese Patent 3017175 B
PTL2: Japanese Patent 4885281 B
PTL3: Japanese Patent Application 2017154462 A

### Summary of Invention

### Technical Problem

In the methods described in PTL1 and PTL2, a thermosetting resin is used for the matting layer. When the degree of curing of the matting layer is insufficient, the adhesiveness between the matting layer and the release layer is reduced, and a problem has been that the release layer remains on a portion of the protective layer after being peeled off (defective transfer).

The present invention has been made in consideration of such situations, and an object of thereof is to provide a transfer sheet with good transferability that is capable of imparting a design having a gloss difference to a decorative molded article. Another object of the present invention is to provide a method for producing a decorative molded article, the method enabling, by using the transfer sheet of the present invention, impartment of a design having a gloss difference to the decorative molded article and suppression of occurrence of a defective transfer.

### Solution to Problem

The object is achieved by the subject-matter of claims 1 and 8. Advantageous further developments are subject-matter of the dependent claims.

### Advantageous Effects of Invention

The transfer sheet of the present invention can provide good adhesiveness between the release layer and the uneven layer, and can impart a design having a gloss difference to a decorative molded article. By using the transfer sheet of the present invention, when the release sheet is peeled off during the producing process of a decorative molded article, peeling between the release layer and the uneven layer can be suppressed. As a result, the occurrence of a defective transfer can be suppressed.

### Brief Description of Drawings

[Fig. 1] Fig. 1 is a schematic cross-sectional view showing one embodiment of a transfer sheet of the present invention.
[Fig. 2] Fig. 2 is a schematic cross-sectional view showing a decorative molded article produced by using a transfer sheet of the present invention.

### Description of Embodiments

### [Transfer Sheet]

The present invention provides a transfer sheet comprising a transfer layer on a release sheet, wherein the release sheet comprises: a substrate; an uneven layer provided on a portion of one surface of the substrate and containing a matting agent and a binder resin comprising a thermoplastic resin; and a release layer provided on the uneven layer and on a portion of the substrate where the uneven layer is not formed.

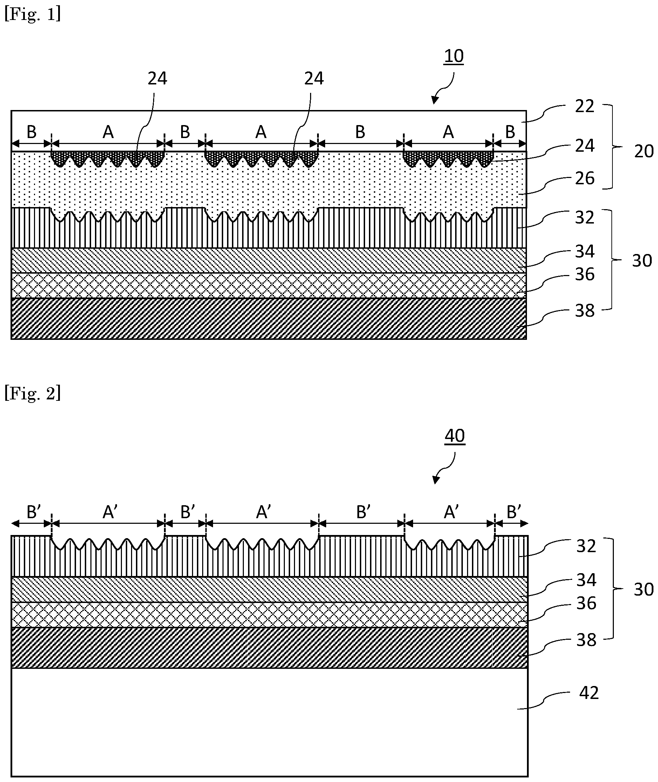

Fig. 1 is a schematic cross-sectional view showing one embodiment of a transfer sheet of the present invention. A transfer sheet 10 in Fig. 1 includes a release sheet 20 and a transfer layer 30.

In Fig. 1, the release sheet 20 comprises: an uneven layer 24 provided on one surface of a substrate 22; and a release layer 26 formed on the substrate 22 and the uneven layer 24.

In Fig. 1, a transfer layer 30 includes a protective layer 32, a print layer 36, and an adhesive layer 38 in this order from the side of the release sheet 20. The protective layer 32 and the release layer 26 are in contact with each other. The transfer layer 30 may further have a primer layer 34 between the protective layer 32 and the print layer 36.

As illustrated in Fig. 1, the uneven layer 24 is formed on a portion of one surface of the substrate 22 in a predetermined pattern. That is, the transfer sheet 10 has, in the surface of the substrate 22, a region where the uneven layer 24 is formed (reference sign A in Fig. 1) and a region where the uneven layer is not formed (reference sign B in Fig. 1). It is preferable that a plurality of regions A should be provided in the surface of the substrate 22. Corresponding to the pattern of the uneven layer 24, patterns are formed on the release layer 26 and the protective layer 32.

Hereinafter, each layer of the transfer sheet will be described in detail. Note that the notation of the numerical range "AA to BB" as used herein means "AA or more and BB or less".

### [Release Sheet]

### <Substrate>

The form of a substrate may be either sheet shape or film shape.

Examples of the substrates include a plastic film composed of resins such as: polyolefin-based resins including polyethylene and polypropylene; vinyl-based resins including polyvinyl chloride, polyvinylidene chloride, polyvinyl alcohol, ethylene/vinyl acetate copolymer, and ethylene/vinyl alcohol copolymer; polyester-based resins including polyethylene terephthalate, polyethylene naphthalate, and polybutylene terephthalate; acrylic-based resins such as polymethyl (meth)acrylate and polyethyl (meth)acrylate; styrene-based resins including polystyrene; and polyamide-based resins represented by nylon 6 or nylon 66.

Of these plastic films, a biaxially stretched polyester film having excellent heat resistance and dimensional stability is preferable.

The thickness of a substrate is preferably 12 to 150 µm, and more preferably 25 to 100 µm.

Also, for the purpose of enhancing the adhesiveness of the substrate with the uneven layer and the release layer, the surface of the substrate may be subjected to a physical treatment such as corona discharge treatment or oxidation treatment, or may be coated with an anchor agent or a coating material called a primer, in advance.

### <Uneven Layer>

The uneven layer is provided at least on a portion of one surface of the substrate. By forming the uneven layer on a portion of the surface of the substrate, an uneven profile caused by the uneven layer can be imparted to the surface of the protective layer (the interface between the protective layer and the release layer). By using the transfer sheet of the present invention, it becomes possible to produce a decorative molded article to which a design of a pattern having a gloss difference is imparted in the surface of the protective layer.

In the present invention, the uneven layer is required to contain a binder resin and a matting agent, and the binder resin is required to comprise a thermoplastic resin.

In the case where the uneven layer is formed with a thermosetting resin, since the release layer is formed after curing the uneven layer, the adhesiveness between the uneven layer and the release layer becomes poor. Therefore, when transferring to the adherend, the uneven layer and the release layer may be peeled off from each other and the release layer may remain on the decorative molded article. In addition, the profile of the uneven layer may be disrupted due to curing shrinkage, and the design decorativeness of the matt part may be deteriorated when made into a decorative molded article.

Moreover, in the case where the release layer is formed on the uneven layer without completely curing the thermosetting resin at the time of formation of the uneven layer, there is a possibility that the uneven layer will be swollen by the solvent contained in the release layer-forming coating liquid depending on the degree of curing. Due to this, there is a risk that the design decorativeness of the matt part may be deteriorated when made into a decorative molded article.

In the present invention, by forming the uneven layer using a thermoplastic resin as the main component of the binder resin, it becomes possible to provide good adhesiveness between the release layer and the uneven layer. As a result, when the transfer sheet of the present invention is used for transfer, the difference in peel strength between the release layer and the transfer layer (protective layer) can be made less likely to occur, and good peelability can be provided. In addition, when using a thermoplastic resin, there is no influence of curing shrinkage or swelling caused by solvents, and therefore, the uneven profile becomes smooth, which also provides a good appearance when made into a decorative molded article. In the present invention, the binder resin should consist substantially of a thermoplastic resin. In the present invention, the term "substantially" means that the proportion of the thermoplastic resin in the binder resin is 95% or more, preferably 98% or more, and more preferably 100%.

The thickness of the uneven layer after drying is preferably 0.5 µm or more and 50 µm or less, more preferably 0.5 µm or more and 25 µm or less, and still more preferably 0.5 µm or more and 10 µm or less. Note that the thickness of the uneven layer is the average value obtained by measuring the thickness of the uneven layer at arbitrary 20 points using a scanning electron microscope (SEM).

The area proportion of the uneven layer in the surface of the substrate is preferably 1% or more, more preferably 5% or more, and still more preferably 10% or more. In addition, the area proportion is preferably 99% or less, more preferably 95% or less, and still more preferably 90% or less.

As for the thermoplastic resin, a polyolefin resin such as polypropylene and polyethylene, a polyester resin, a polycarbonate resin, an acrylonitrile-butadienestyrene resin (hereinafter, also referred to as an "ABS resin"), an acrylic resin, a vinyl chloride resin, a cellulose resin, and the like can be used, for example. In the present invention, the resins listed above can be used alone or in combination of plural kinds.

Among the above, it is preferable that the thermoplastic resin should be an acrylic resin or a cellulose resin from the viewpoints of dispersibility of the matting agent and of adhesiveness with the release layer. In addition, even when ionizing radiation is used upon the formation of the protective layer or the like, which will be mentioned later, the acrylic resin and the cellulose resin have stability against ionizing radiation and can thus be suitably used. The acrylic resin is not specifically limited, but examples thereof include a homopolymer of a (meth)acrylic acid ester, a copolymer of two or more different (meth)acrylic acid ester monomers, or a copolymer of a (meth)acrylic acid ester and another monomer. More specifically, examples of the (meth)acrylic resin include a (meth)acrylic acid ester such as polymethyl (meth)acrylate, polyethyl (meth)acrylate, polypropyl (meth)acrylate, polybutyl (meth)acrylate, a methyl (meth)acrylate-butyl (meth)acrylate copolymer, an ethyl (meth)acrylate-butyl (meth)acrylate copolymer, an ethylene-methyl (meth)acrylate copolymer, and a styrene-methyl (meth)acrylate copolymer. Examples of the cellulose resin include a nitrocellulose resin.

The thermoplastic resin described above preferably has a weight average molecular weight of 10,000 or more and 200,000 or less, and more preferably 30,000 or more and 150,000 or less. When the molecular weight is in the above range, it is easy to prepare the uneven layer-forming coating liquid and the profile stability of the uneven layer can be made good. Note that the "weight average molecular weight" here means the weight average molecular weight in terms of polystyrene as measured by gel permeation chromatography (GPC).

The matting agent contained in the uneven layer preferably has an average particle size of 0.5 µm or more. When the average particle size of the matting agent is 0.5 µm or more, the uneven profile caused by the uneven layer is easily formed on the protective layer. In order to impart an uneven profile with a sufficient size to the protective layer, the average particle size of the matting agent is preferably 1.0 µm or more, more preferably 3.0 µm or more, and still more preferably 5.0 µm or more. In addition, in consideration of the visibility of the print layer in the region where the uneven profile caused by the uneven layer is imparted and of the ease with which the uneven layer can be formed when made into a decorative molded article, the average particle size of the matting agent is preferably 20 µm or less, more preferably 15 µm or less, and still more preferably 10 µm or less.

The ratio of the average particle size of the matting agent to the thickness of the uneven layer is preferably 1 or more, more preferably 1.2 or more, and still more preferably 1.4 or more. When the ratio satisfies the above values, a sufficient matt effect of the decorative molded article can be imparted. On the other hand, when the uneven layer is thin in relation to the average particle size of the matting agent, the matting agent may fall out of the uneven layer. Therefore, in consideration of the retention properties of the matting agent, the ratio is preferably 10 or less, more preferably 8 or less, and still more preferably 6 or less.

As used herein, the average particle size is the average value of particle sizes (arithmetic mean size) measured for 100 randomly selected, non-aggregated particles by observing a cross-section of the layer in the thickness direction with a scanning electron microscope (SEM) under conditions with an acceleration voltage of 3.0 kV and a magnification of 50,000 times.

The matting agent can be an inorganic particle or an organic particle.

Examples of the inorganic particle include silica, alumina, clay, talc, diatomaceous earth, zeolite, calcium carbonate, barium sulfate, zinc oxide, titanium dioxide, and glass beads. Also, examples of the organic particle include a variety of synthetic resin particles, such as a melamine resin, a benzoguanamine resin, a benzoguanamine/melamine/formalin condensation product, an acrylic resin, a urethane resin, and a styrene resin. One of them may be used, or two may be mixed for use. The particle may be spherical or irregular in shape.

In particular, a silica particle is preferable because it provides a good matting effect on the surface of the decorative molded article and has an advantage of low production cost.

In the present invention, the matting agent is contained in an amount of 50 parts by mass or more and 180 parts by mass or less (solid content) based on 100 parts by mass (solid content) of the binder resin. When the amount thereof is 50 parts by mass or more, it is possible to form a moderate and fine uneven profile on the surface of the uneven layer and on the surface of the release layer over the uneven layer. As a result, it is possible to impart the desired matt design to the decorative molded article. When an uneven layer containing a thermosetting resin and a matting agent is formed, the flexibility of the layer is low, which may cause the uneven layer to be cracked during the producing process of a decorative molded article, disrupting its shape and resulting in poor design decorativeness of the matt part when made into a decorative molded article. Under such circumstances, it was not possible to add a matting agent in a large amount when using a thermosetting resin. In the present invention, it is thought that, by forming the uneven layer with a thermoplastic resin, the uneven layer has flexibility even when the matting agent is incorporated in the above amount, and the profile of the uneven layer is retained during the producing process of a decorative molded article.

Considering the formability of the uneven profile, the content of the matting agent is more preferably 75 parts by mass or more, and still more preferably 90 parts by mass or more. By setting the content thereof to 180 parts by mass or less, a reduction in the film strength of the uneven layer can be suppressed, and the uneven profile can be maintained during the producing process of the transfer sheet and the producing process of the decorative molded article. In addition, when the release sheet is peeled off, the peel strength can be made approximately uniform to suppress a defective transfer. Furthermore, good visibility of the print layer is provided when made into a decorative molded article. The content of the matting agent is more preferably 160 parts by mass or less, and still more preferably 140 parts by mass or less.

It is preferable that the formation pattern of the uneven layer should be selected as appropriate depending on the pattern of the print layer, which will be mentioned later. Examples of the pattern include wood, stone, fabric, sand, circle, square, polygon, geometric patterns, and characters.

In the formation of the uneven layer, at first, an uneven layer-forming coating liquid is prepared by adding an additive agent as necessary to a thermoplastic resin, which is the binder resin, and a matting agent, followed by the addition of an appropriate solvent. This coating liquid is applied onto the substrate by a known means such as gravure printing method and screen printing method, and then dried to form the uneven layer.

### <Release Layer>

The release layer is provided on the uneven layer and on the substrate. In the region where the uneven layer is provided, as illustrated in Fig. 1, the release sheet is configured in the order of the substrate, uneven layer, and release layer in the thickness direction. In contrast, in the region where the uneven layer is not provided, it is configured in the order of the substrate and the release layer in the thickness direction.

The surface of the release layer on the opposite side of the substrate has different surface profiles in a region formed on the uneven layer (reference sign A in Fig. 1) and in a region not on the uneven layer (reference sign B in Fig. 1). That is, a pattern corresponding to the pattern of the uneven layer is formed on the surface of the release layer on the opposite side of the substrate.

The resin component of the release layer is not particularly limited as long as it is a material that has a low adhesion strength to the protective layer and is capable of easily peeling off the transfer layer from the substrate. Examples thereof include a cured product of a thermosetting resin composition or a cured product of an ionizing radiation curable resin composition. Specific examples thereof include a fluororesin, a silicone resin, an acrylic resin, a polyester resin, a polycarbonate resin, a polyolefin resin, a polystyrene resin, a polyurethane resin, and a vinyl chloride-vinyl acetate copolymer resin. Among these resin components, a cured product of an ionizing radiation curable resin composition is preferable because it is excellent in strength and can also be cured instantaneously and thus impart a correct and accurate profile. A cured product of an electron beam curable resin composition is more preferable.

The ionizing radiation curable resin is a resin that is crosslinked and cured by irradiation with ionizing radiation, and has an ionizing radiation curable functional group. The ionizing radiation curable functional group is a group that is crosslinked and cured by irradiation with ionizing radiation, and preferable examples thereof include a functional group having an ethylenic double bond such as a (meth)acryloyl group, a vinyl group, and an allyl group. In addition, ionizing radiation means an electromagnetic wave or a charged particle beam having an energy quantum capable of polymerizing or crosslinking molecules; ultraviolet rays (UV) or electron beams (EB) are typically used; and electromagnetic waves such as X-rays and γ-rays and charged particle beams such as α-rays and ion rays are also included. Of these, the cured product of the electron beam curable resin composition is particularly preferable.

Specifically, the ionizing radiation curable resin can be used by appropriately selecting from the group consisting of polymerizable monomers and polymerizable oligomers commonly used as ionizing radiation curable resins.

As a polymerizable monomer, a (meth)acrylate-based monomer having a radically polymerizable unsaturated group in the molecule is preferable, and a polyfunctional (meth)acrylate monomer is particularly preferable.

Examples of the polyfunctional (meth)acrylate monomer include a (meth)acrylate monomer having two or more ionizing radiation curable functional groups in the molecule and having at least a (meth)acryloyl group as the functional group.

From the viewpoints of heat resistance and moldability, the number of functional groups is preferably 2 or more and 8 or less, more preferably 2 or more and 6 or less, still more preferably 2 or more and 4 or less, and particularly preferably 2 or more and 3 or less. These polyfunctional (meta)acrylate monomers may be used singly or in combination of two or more. In addition, one or more of these polyfunctional (meth)acrylate monomers and one or more of the polymerizable oligomers described below may be mixed into a composition for use. Preparing a composition by mixing both the monomer and the oligomer can adjust, for example, the crosslink density of a cured product and the molecular weight between crosslinks, and can adjust various physical properties of the cured product.

Examples of the polymerizable oligomer include a (meth)acrylate oligomer having two or more ionizing radiation curable functional groups in the molecule and having at least a (meth)acryloyl group as the functional group. Examples thereof include urethane (meth)acrylate oligomer, epoxy (meth)acrylate oligomer, polyester (meth)acrylate oligomer, polyether (meth)acrylate oligomer, polycarbonate (meth)acrylate oligomer, and acrylic (meth)acrylate oligomer.

From the viewpoints of heat resistance and moldability, the number of functional groups of these polymerizable oligomers is preferably 2 or more and 8 or less, more preferably 6 or less as the upper limit, still more preferably 4 or less, and particularly preferably 3 or less.

In particular, it is preferable that the resin component should be an acryl (meth)acrylate compound or a urethane (meth)acrylate compound, considering the adhesiveness with the uneven layer. Here, "(meth)acrylate" means "acrylate or methacrylate". The resin component may be any of the acryl (meth)acrylate compound and the urethane (meth)acrylate compound, or it may be a mixture thereof. The acryl (meth)acrylate compound and the urethane (meth)acrylate compound may each be a monomer, an oligomer, or a mixture of monomer and oligomer.

From the viewpoints of heat resistance and moldability, the weight average molecular weight of the monomer and oligomer used for a release layer is preferably 250 or more and 30000 or less, more preferably 250 or more and 20000 or less, and still more preferably 250 or more and 15000 or less. The weight average molecular weight is an average molecular weight measured by GPC analysis and converted with standard polystyrene.

Additives such as curing agents and polymerization initiators may be added to a resin composition as necessary.

The release layer may contain a release agent to improve releasability from the protective layer.

Examples of the release agent include waxes such as a synthetic wax and a natural wax. Examples of the synthetic wax include a polyolefin wax such as a polyethylene wax and a polypropylene wax. In addition, from the viewpoints of improvement in the hardness of the release layer, suppression of bleeding of the release agent, and dispersibility of the particles, it is preferable to use a crosslinking curable release component such as a reactive silicone as the release agent.

The mass ratio of the releasing agent to the total solid content of the release layer is preferably 0.3 to 10% by mass, and more preferably 0.5 to 5% by mass.

It is preferable for the release layer to have a thickness that allows the uneven profile formed on the surface of the release layer to follow the profile of the uneven layer well, that allows the release layer to be easily formed, and that provides good peelability from the protective layer. Specifically, the thickness of the release layer is preferably 0.5 µm or more and 50 µm or less, and is more preferably 0.5 µm or more and 10 µm or less.

The release layer may further contain a matting agent. In this manner, when made into a decorative molded article, it is possible to provide matt feeling as a whole, while further distinguishing the gloss difference in every region. As the matting agent, the same one used for the uneven layer can be used. In particular, from the viewpoint of cost, it is preferable to contain a silica particle.

When the release layer contains a matting agent, it is preferable that the amount of the matting agent added should be less than the amount added in the uneven layer. Specifically, as for the amount added, the matting agent is preferably contained in an amount of 0.1 parts by mass or more and 10 parts by mass or less (solid content), and more preferably in an amount of 1.0 parts by mass or more and 5 parts by mass or less, based on 100 parts by mass (solid content) of the resin component of the release layer. When the amount added is in the above range, it is possible to provide the desired matt design to the decorative molded article.

The average particle size of the matting agent contained in the release layer is preferably 0.5 µm or more, and is more preferably 0.7 µm or more. When the average particle size of the matting agent is 0.5 µm or more, the uneven profile due to the release layer is easily formed on the protective layer. In consideration of the visibility of the print layer and the like when made into a decorative molded article, the average particle size of the matting agent contained in the release layer is preferably 60 µm or less, and is more preferably 25 µm or less.

The ratio of the average particle size of the matting agent to the thickness of the release layer is preferably 1 or more, more preferably 1.2 or more, and still more preferably 1.4 or more. When the ratio satisfies the above values, a sufficient matt effect of the decorative molded article can be imparted. On the other hand, when the release layer is thin in relation to the average particle size of the matting agent, the matting agent may fall out of the uneven layer. Therefore, in consideration of the retention properties of the matting agent, the ratio is preferably 10 or less, more preferably 8 or less, and still more preferably 6 or less.

In order to create a design in which there is a gloss difference between the area corresponding to the uneven layer and the surrounding area (the area where the uneven layer is not provided) when made into a decorative molded article, it is preferable to make the average particle size, the amount added, and the ratio of the matting agent average particle size to the layer thickness of the matting agents contained in the uneven layer and the release layer different from each other. An aspect in which the uneven layer exhibits a more matted design compared to the release layer is more preferable.

The release layer can be formed by a known printing method such as a gravure printing method, an offset printing method, a letterpress printing method, and a silk screen printing method.

### <Other Layer>

The resin layer (blocking resin layer) containing a filler may be formed between a substrate and a pattern layer. Forming the resin layer can prevent blocking when a roll-shaped transfer film is produced.

An antistatic layer may be provided on a substrate surface that is opposite side of a release layer. The antistatic layer is preferably provided between the substrate and a pattern layer. Providing the antistatic layer can suppress the charge on a transfer sheet, thereby reducing foreign matter adhesion for example. This can improve transfer workability.

The antistatic layer may be in contact with the substrate, and the above blocking preventive layer or primer layer may be provided between the antistatic layer and the substrate.

### [Transfer Layer]

### <Protective Layer>

The protective layer is provided on the release sheet side of the transfer layer. The protective layer has different surface profiles in a region formed on the uneven layer (reference sign A in Fig. 1) and in a region not on the uneven layer (reference sign B in Fig. 1). The protective layer is in contact with the release layer, and it is preferable that its surface on the substrate side should have a profile complementary to that of the surface of the release layer described above.

A protective layer preferably includes a cured product of a curable resin composition. Examples of the cured product of the curable resin composition include the cured product of a thermosetting resin composition, the cured product of an ionizing radiation curable resin composition, and a cured product of a mixture thereof, and of these, the cured product of the ionizing radiation curable resin composition is preferable from the viewpoint of abrasion resistance of the protective layer. In addition, of the cured products of the ionizing radiation curable resin composition, the cured product of the electron beam curable resin composition is preferable from the viewpoints of easy completion of crosslinked hardening in formation of the protective layer.

The thermosetting resin composition is at least a composition including a thermosetting resin and is a resin composition that is cured by heating. Examples of the thermosetting resin include an acrylic resin, a urethane resin, a phenol resin, an urea melamine resin, an epoxy resin, an unsaturated polyester resin, and a silicone resin. For the thermosetting resin composition, a curing agent is added to these thermosetting resins as necessary.

Specifically, the ionizing radiation curable resin can be used by appropriately selecting from the group consisting of polymerizable monomers and polymerizable oligomers commonly used as ionizing radiation curable resins.

As a polymerizable monomer, a (meth)acrylate-based monomer having a radically polymerizable unsaturated group in the molecule is preferable, and a polyfunctional (meth)acrylate monomer is particularly preferable.

Examples of the polyfunctional (meth)acrylate monomer include a (meth)acrylate monomer having two or more ionizing radiation curable functional groups in the molecule and having at least a (meth)acryloyl group as the functional group, and the acrylate monomer having an acryloyl group is preferable. These polymerizable oligomers may be used singly or in combination of two or more.

The number of functional groups of the polymerizable monomer is preferably 2 or more and 8 or less, more preferably 2 or more and 6 or less, still more preferably 2 or more and 4 or less, and particularly preferably 2 or more and 3 or less.

Examples of the polymerizable oligomer include a (meth)acrylate oligomer having two or more ionizing radiation curable functional groups in the molecule and having at least a (meth)acryloyl group as the functional group. Examples thereof include a urethane (meth)acrylate oligomer, an epoxy (meth)acrylate oligomer, a polyester (meth)acrylate oligomer, a polyether (meth)acrylate oligomer, a polycarbonate (meth)acrylate oligomer, and an acrylic (meth)acrylate oligomer.

These polymerizable oligomers may be used singly or in combination of two or more.

Of polymerizable oligomers, polycarbonate (meth)acrylate oligomers are preferable. The polycarbonate (meth)acrylate oligomer is not particularly limited as long as it has carbonate binding on the main chain and (meth)acrylate groups on the end or side chains, and may be a polycarbonate-based urethane (meth)acrylate oligomer that is a urethane (meth)acrylate oligomer having a polycarbonate skeleton.

From the viewpoints of heat resistance and moldability, the number of functional groups of these polymerizable oligomers is preferably 2 or more and 8 or less, more preferably 6 or less as the upper limit, still more preferably 4 or less, and particularly preferably 3 or less.

For the ionizing radiation curable resin, a monofunctional (meth)acrylate can be used in combination as appropriate along with the above-described multifunctional (meth)acrylate or the like, for the purpose of reducing its viscosity or the like. These monofunctional (meth)acrylates may be used alone or in combination of plural kinds.

From the viewpoints of heat resistance and moldability, the weight average molecular weight of the monomer and oligomer used for a protective layer is preferably 250 or more and 30000 or less, more preferably 250 or more and 20000 or less, and still more preferably 250 or more and 15000 or less.

It is preferable that the protective layer should contain substantially no particles such as organic particles and inorganic particles. When the protective layer does not contain particles, it is possible to make the pattern of the print layer, which will be the underlying layer, easily visible.

The phrase "substantially no particles contained in the protective layer" means that the particles are contained in an amount of 1% by mass or less of the entire solid content of the protective layer, preferably 0.1% by mass or less, more preferably 0.01% by mass or less, and still more preferably 0% by mass.

A protective layer may also further contain a thermoplastic resin as a resin component other than the cured product of the curable resin composition. The protective layer including the thermoplastic resin prevents cracking during molding and provides good moldability. Common resins such as an acrylic based resin, a polyester-based resin, and a urethane-based resin can be used for the thermoplastic resin.

The content of the thermoplastic resin is preferably 0.1 to 20% by mass, more preferably 0.5 to 10% by mass, and still more preferably 1 to 5% by mass, with respect to the total solid content of the protective layer.

The thickness of a protective layer is preferably 0.5 to 30 µm, more preferably 1 to 20 µm, and still more preferably 1 to 10 µm, from the viewpoint of the balance between surface hardness and moldability.

A protective layer can be formed by a known printing method such as a gravure printing method, an offset printing method, a letterpress printing method, and a silk screen printing method.

A thermosetting resin composition and/or an ionizing radiation curable resin composition may be completely cured in forming a protective layer; however, from the viewpoint of moldability, the thermosetting resin composition and/or the ionizing radiation curable resin composition are uncured or semi-cured in forming the protective layer, are transferred to an adherend, and then may be progressively cured to result in complete curing.

### <Print Layer>

A print layer is a layer for providing the desired design decorativeness to a decorative molded article.

The pattern of the print layer is arbitrary, for example, wood, stone, fabric, sand, circle, square, polygon, geometric patterns, characters, and solid printing.

A print layer preferably includes a binder resin such as a polyvinyl-based resin, a polyester-based resin, an acrylic based resin, a polyvinyl acetal-based resin, and a cellulose-based resin, and a pigment and/or a dye.

The thickness of the print layer is preferably 0.5 to 40 µm, and more preferably 1 to 30 µm, from the viewpoint of design decorativeness.

A print layer can be formed by a known printing method such as a gravure printing method, an offset printing method, a letterpress printing method, and a silk screen printing method.

### <Adhesive Layer>

An adhesive layer has a role to improve adhesiveness between the adherend such as a resin molded body and a transfer layer. When the adhesiveness between a protective layer and the adherend is good, no adhesive layer may be provided.

The resin having the adhesiveness suitable for the material of the adherend is preferably used for an adhesive layer. For example, when the adherend material is acrylic based resin, acrylic based resin is preferably used. In addition, when the material of the adherend is polyphenylene oxide/polystyrene based resin, polycarbonate-based resin, or styrene-based resin, it is preferable to use a resin having an affinity for these resins, for example, an acrylic based resin, a polystyrene-based resin, or a polyamide-based resin. Furthermore, when the material of the adherend is polypropylene resin, it is preferable to use a chlorinated polyolefin resin, a chlorinated ethylene-vinyl acetate copolymer resin, a cyclized rubber, or a coumarone-indene resin.

The adhesive layer may be formulated with an additive such as an ultraviolet absorber and an infrared absorber.

The thickness of the adhesive layer is preferably 0.1 to 10 µm, and more preferably 0.5 to 5 µm.

An adhesive layer can be formed by a known printing method such as a gravure printing method, an offset printing method, a letterpress printing method, and a silk screen printing method.

### <Primer Layer>

A primer layer is a layer that is provided as necessary to improve the adhesion between a protective layer and a print layer.

Preferably, a primer layer mainly includes a resin composition. In addition, in consideration of providing heat resistance, the resin component of the primer layer preferably includes a cured product of a curable resin composition, when placed in a high temperature environment such as in-mold molding.

Examples of the curable resin composition include a thermosetting resin composition and an ionizing radiation curable resin composition. As the thermosetting resin composition and the ionizing radiation curable resin composition of the primer layer, there can be used the same ones as those exemplified as the thermosetting resin composition and the ionizing radiation curable resin composition of the protective layer.

Particularly, the primer layer preferably includes the cured product of a thermosetting resin composition. Examples of the thermosetting resin composition include a two-component curable urethane resin including a various polyol compound such as a polyether polyol, a polyester polyol, and an acrylic polyol, and a curing agent such as an isocyanate compound.

The thickness of a primer layer is preferably 0.1 to 6 µm, and more preferably 0.5 to 5 µm.

The primer layer may have a single layer structure; however, it may also have a structure in which two or more layers are laminated, in consideration of, for example, adhesion between layers.

A primer layer can be formed by a known printing method such as a gravure printing method, an offset printing method, a letterpress printing method, and a silk screen printing method.

### [Decorative Molded Article]

The decorative molded article produced by using the transfer sheet of the present invention will be described with reference to Fig. 2. Fig. 2 is a schematic cross-sectional view of a decorative molded article. A decorative molded article 40 has an adherend 42 and a transfer layer 30 that covers the adherend. In Fig. 2, the transfer layer 30 includes an adhesive layer 38, a print layer 36, a primer layer 34, and a protective layer 32 in this order from the side of the adherend. The protective layer 32 is located on the outermost layer of the decorative molded article 40.

### <Adherend>

An adherend is a resin molded body composed of resin. The shape of the adherend may be a flat shape or a three-dimensional shape having, for example, a curved surface. In addition, the adherend may be colored.

The resin molded body can be formed from a thermoplastic resin or thermosetting resin.

When a decorative molded article is produced by in-mold molding, it is preferable to use a thermoplastic resin as the resin molded article. Examples of these thermoplastic resins include a polystyrene-based resin, a polyolefin-based resin, an ABS resin (including a heat resistant ABS resin), an AS resin, a PC/ABS based resin, a PC/AS based resin, an AN resin, a polyphenylene oxide based resin, a polycarbonate-based resin, a polyacetal-based resin, an acrylic based resin, a polyethylene terephthalate based resin, a polybutylene terephthalate based resin, a polysulfone based resin, and a polyphenylene sulfide based resin.

### <Protective Layer>

It is preferable that the protective layer in the decorative molded article of the present invention should have an uneven profile that is approximately complementary to the surface profile of the release layer of the release sheet. This uneven profile is the profile corresponding to the pattern of the uneven layer. For example, the surface of the protective layer has a minute uneven profile at the point corresponding to the uneven layer (reference sign A' in Fig. 2). Therefore, the point corresponding to the uneven layer (reference sign A' in Fig. 2) is a region with a low gloss that has a matting effect compared to its surroundings (reference sign B' in Fig. 2). That is, the decorative molded article of the present invention has a pattern with a gloss difference in the surface. In the present invention, the region of the reference sign B' does not necessarily need to be glossy. As long as the region of reference sign B' is glossier than the region of reference sign A' and the gloss difference is clear, the region B' may have a matting effect.

### [Method for Producing Decorative Molded Article]

A method for producing a decorative molded article of the present invention comprises: (1) a step of adhering the transfer layer of the transfer sheet to an adherend via an adhesive layer, thereby laminating the transfer sheet on the adherend; and (2) a step of peeling off the release sheet of the transfer sheet to transfer the transfer layer on the adherend.

The transfer sheet of the present invention is particularly preferably applied to the produce of the decorative molded article by in-mold molding (injection molding simultaneous transfer decoration method). According to the present invention, it is possible to transfer a pattern having a gloss difference on the surface of a resin molded product having a complicated surface profile such as a three dimensional curved surface.

One embodiment of the method of producing a decorative molded article by in-mold molding has the following steps:
(S 1) a step of arranging a transfer layer side of a transfer sheet toward the inside of an in-mold molding die;
(S2) a step of injecting a resin for an adherend into the in-mold molding die;
(S3) a step of integrating the transfer sheet and the above resin to form a laminate in which the transfer sheet is laminated on the surface of a resin molded body (adherend); and
(S4) a step of peeling off the release sheet of the transfer sheet after taking out the laminate from the die or in simultaneously taking out the resin molded body from the die.

In the present invention, the binder resin of the uneven layer is a thermoplastic resin, which provides excellent adhesiveness between the release layer and the uneven layer. Therefore, when the release sheet is peeled off in producing the decorative molded article, peeling at the interface between the uneven layer and the release layer can be prevented and the peel strength can also be made approximately uniform. As a result, the occurrence of a defective transfer can be suppressed.

### Examples

Then, the present invention will be described in more detail by Examples; however, the present invention is not limited to these examples.

The atmosphere of the following measurement and evaluation was a temperature of 23°C ± 5°C and a humidity of 40 to 65%. In addition, a target sample was exposed to the atmosphere for 30 minutes or more, and measurement and evaluation were performed.

### 1. Evaluation and Measurement

### 1-1. Evaluation of Design Decorativeness

For the decorative molded articles produced in Examples and Comparative Examples, the presence or absence of the gloss difference between the region with the uneven layer and the region without the uneven layer was evaluated in accordance with the following criteria.
2 points: Gloss difference is clear.
1 point: Gloss difference is present, but the clarity of the gloss difference is inferior to the evaluation of "2 points".
0 points: No gloss difference observed.

Twenty subjects made evaluations, and the average point was calculated. The design decorativeness of each decorative molded article was evaluated in accordance with the following criteria.
A: The average point is 1.8 or more.
B⁺: The average point is 1.4 or more and less than 1.8.
B: The average point is 1.0 or more and less than 1.4.
C: The average point is less than 1.0.

### 1-2. Evaluation of Peelability

For each of the transfer sheets of Examples and Comparative Examples, the release sheet was peeled off from the transfer sheet. Those in which the release sheet was easily peeled off and the release layer did not remain on the transfer layer side were given 2 points, those in which the release sheet was difficult to be peeled off but the release layer did not remain on the transfer layer side were given 1 point, and those in which the release sheet was difficult to be peeled off and the release layer was observed to remain on the transfer layer were given 0 points. Evaluation of peelability was performed on 10 release sheets, and the average point was calculated. The peelability of each transfer sheet was evaluated in accordance with the following criteria.
A: The average point is 1.5 or more.
B: The average point is 1.0 or more and less than 1.5.
C: The average point is less than 1.0.

### 2. Preparation of Coating Liquid

### 2-1. Preparation of Coating Liquid for Uneven Layer

Coating liquids for uneven layer having the following formulations were produced.
(1) Coating liquid for uneven layer 1
   nitrocellulose resin (thermoplastic resin, weight average molecular weight: 50,000) 100 parts by mass
   matting agent (irregular silica, average particle size: 5.0 µm) 100 parts by mass
   solvent (ethyl acetate) appropriate amount
(2) Coating liquid for uneven layer 2
   acrylic resin (thermoplastic resin, weight average molecular weight: 100,000) 100 parts by mass
   matting agent (irregular silica, average particle size: 5.0 µm) 100 parts by mass
   solvent (ethyl acetate) appropriate amount
(3) Coating liquid for uneven layer 3
   nitrocellulose resin (thermoplastic resin, weight average molecular weight: 50,000) 100 parts by mass
   matting agent (irregular silica, average particle size: 1.0 µm) 100 parts by mass
   solvent (ethyl acetate) appropriate amount
(4) Coating liquid for uneven layer 4
   nitrocellulose resin (thermoplastic resin, weight average molecular weight: 50,000) 100 parts by mass
   matting agent (irregular silica, average particle size: 0.5 µm) 100 parts by mass
   solvent (ethyl acetate) appropriate amount
(5) Coating liquid for uneven layer 5
   nitrocellulose resin (thermoplastic resin, weight average molecular weight: 50,000) 100 parts by mass
   matting agent (irregular silica, average particle size: 20 µm) 100 parts by mass
   solvent (ethyl acetate) appropriate amount
(6) Coating liquid for uneven layer 6
   nitrocellulose resin (thermoplastic resin, weight average molecular weight: 50,000) 100 parts by mass
   matting agent (irregular silica, average particle size: 5.0 µm) 50 parts by mass
   solvent (ethyl acetate) appropriate amount
(7) Coating liquid for uneven layer 7
   nitrocellulose resin (thermoplastic resin, weight average molecular weight: 50,000) 100 parts by mass
   matting agent (irregular silica, average particle size: 5.0 µm) 180 parts by mass
   solvent (ethyl acetate) appropriate amount

### 2-2. Preparation of Coating Liquid for Release Layer

Coating liquids for release layer having the following formulations were produced.
(1) Coating liquid for release layer 1
   bifunctional urethane acrylate (weight average molecular weight: 8,000) 85 parts by mass
   trifunctional acrylate (weight average molecular weight: 300) 15 parts by mass
   electron beam curable silicone compound 1 part by mass
   solvent (methyl ethyl ketone) appropriate amount
(2) Coating liquid for release layer 2
   tetrafunctional acryl acrylate (weight average molecular weight: 10,000) 100 parts by mass
   electron beam curable silicone compound 1 part by mass
   solvent (methyl ethyl ketone) appropriate amount
(3) Coating liquid for release layer 3
   bifunctional urethane acrylate (weight average molecular weight: 8,000) 85 parts by mass
   trifunctional acrylate (weight average molecular weight: 300) 15 parts by mass
   matting agent (irregular silica, average particle size: 2.0 µm) 10 parts by mass
   solvent (methyl ethyl ketone) appropriate amount

### 2-3. Preparation of Coating Liquid for Protective Layer

A coating liquid for protective layer having the following formulation was produced.
bifunctional urethane acrylate (weight average molecular weight: 10,000) 95 parts by mass
trifunctional acrylate monomer (weight average molecular weight: 300) 5 parts by mass
solvent (methyl ethyl ketone) appropriate amount

### 2-4. Preparation of Coating Liquid for Primer Layer

A coating liquid for primer layer having the following formulation was produced.

### <Coating liquid for primer layer>

acryl polyol (hydroxyl value: 80 mgKOH/g, Tg: 90°C) 100 parts by mass
XDI (m-xylylene diisocyanate) 10 parts by mass
solvent (methyl ethyl ketone) appropriate amount

### 3. Production of Transfer Sheet

### (Example 1)

On one side of a substrate (biaxially stretched polyethylene terephthalate film with a thickness of 75 µm), the coating liquid for uneven layer 1 was applied and dried to form an uneven layer with a thickness of 2 µm. The uneven layer was made to have a wood conduit pattern.

Then, the coating liquid for release layer 1 was applied on the substrate and on the uneven layer, and irradiated with electron beams under conditions of 165 KeV and 7 Mrad (70 kGy) to form a release layer with a thickness of 3 µm.

Then, the coating liquid for a protective layer was applied onto the release layer, and an electron beam was irradiated under the conditions of 165 KeV and 5 Mrad (50 kGy) to form the protective layer having a thickness of 3 µm.

Then, the coating liquid for a primer layer 1 was applied onto the protective layer and dried to form the primer layer having a thickness of 2 µm.

Then, brown ink (acrylic based resin composition) was applied onto the primer layer by using a gravure printing method and dried to form the wood-pattern print layer having a thickness of 6 µm.

Then, a thermoplastic resin (acrylic based resin) had been diluted with a solvent and the resultant coating liquid for an adhesive layer was applied onto the print layer and dried to be formed into the 2 µm thick adhesive layer having heat sealing properties. The transfer sheet of Example 1 was obtained by the steps described above.

### (Example 2)

The transfer sheet of Example 2 was produced by the same steps as in Example 1, except that the coating liquid for uneven layer 2 was used.

### (Example 3)

The transfer sheet of Example 3 was produced by the same steps as in Example 1, except that the coating liquid for release layer 2 was used.

### (Example 4)

The transfer sheet of Example 4 was produced by the same steps as in Example 1, except that the coating liquid for release layer 3 was used.

### (Example 5)

The transfer sheet of Example 5 was produced by the same steps as in Example 1, except that the thickness of the release layer was changed to 0.5 µm.

### (Example 6)

The transfer sheet of Example 6 was produced by the same steps as in Example 1, except that the thickness of the release layer was changed to 20 µm.

### (Example 7)

The transfer sheet of Example 7 was produced by the same steps as in Example 1, except that the coating liquid for uneven layer 3 was used.

### (Example 8)

The transfer sheet of Example 8 was produced by the same steps as in Example 1, except that the coating liquid for uneven layer 4 was used.

### (Example 9)

The transfer sheet of Example 9 was produced by the same steps as in Example 1, except that the coating liquid for uneven layer 5 was used.

### (Example 10)

The transfer sheet of Example 10 was produced by the same steps as in Example 1, except that the coating liquid for uneven layer 6 was used.

### (Example 11)

The transfer sheet of Example 11 was produced by the same steps as in Example 1, except that the coating liquid for uneven layer 7 was used.

### (Comparative Example 1)

As the coating liquid for uneven layer of Comparative Example 1, a coating liquid containing a thermosetting resin having the following formulation was prepared.

On one side of a substrate (biaxially stretched polyethylene terephthalate film with a thickness of 75 µm), the coating liquid for uneven layer of Comparative Example 1 was applied and dried. As in Example 1, the uneven layer was formed on a portion of the substrate. It was then cured by aging at 40°C for 96 hours to form an uneven layer with a thickness of 2.5 µm, and a release layer with a thickness of 3 µm was formed. The other layers were formed in the same manner as in Example 1, thereby obtaining the transfer sheet of Comparative Example 1.

### <Coating liquid for uneven layer of Comparative Example 1>

acryl polyol (hydroxyl value: 80 mgKOH/g, Tg: 65°C, solid content: 50%, solvent: toluene/ethyl acetate mixed solvent) 40 parts by mass
isocyanate (main component: XDI, solid content: 75%, solvent: ethyl acetate) 14 parts by mass
matting agent (irregular silica, average particle size: 5.0 µm) 4 parts by mass
solvent (ethyl acetate) 40 parts by mass

### (Comparative Example 2)

The transfer sheet of Comparative Example 2 was obtained by the same steps as in Example 1, except that no uneven layer was provided.

### 4. Production of Decorative Molded Article

Each of the transfer sheets of Examples 1 to 11 and Comparative Examples 1 and 2 was arranged on one side of a pair of upper and lower in-mold molding dies. An adhesive layer was arranged so as to face the inside of the die (the side in contact with an injection resin).

Then, the die was tightened, the injection resin (PC/ABS resin) was injected into the die to provide a laminate (plate-shaped body having 10 cm × 16 cm × 2 mm thick) in which the transfer sheet and the injection resin layer including the injection resin were integrated with each other.

Then, the die was opened, and then the transfer sheet (substrate to release layer) was peeling off from the laminate to provide the decorative molded articles of Examples 1 to 11 and Comparative Examples 1 and 2.

### 4. Result

The evaluation results of the transfer sheets and the decorative molded articles of Examples and Comparative Examples are shown in Table 1.

**Table 1**

| | Uneven layer | | | Release layer | | Peelability | Design decorativeness |
|---|---|---|---|---|---|---|---|
| | Binder resin component | Matting agent particle size (µm) | Amount of matting agent added (parts by mass) | Thickness (µm) | Presence or absence of matting agent | | |
| Example 1 | Nitrocellulose resin | 5.0 | 100 | 3 | None | A | A |
| Example 2 | Acrylic resin | 5.0 | 100 | 3 | None | A | A |
| Example 3 | Nitrocellulose resin | 5.0 | 100 | 3 | None | A | A |
| Example 4 | Nitrocellulose resin | 5.0 | 100 | 3 | Present | A | A |
| Example 5 | Nitrocellulose resin | 5.0 | 100 | 0.5 | None | B | A |
| Example 6 | Nitrocellulose resin | 5.0 | 100 | 20 | None | A | B⁺ |
| Example 7 | Nitrocellulose resin | 1.0 | 100 | 3 | None | A | B⁺ |
| Example 8 | Nitrocellulose resin | 0.5 | 100 | 3 | None | A | B |
| Example 9 | Nitrocellulose resin | 20 | 100 | 3 | None | A | B |
| Example 10 | Nitrocellulose resin | 5.0 | 50 | 3 | None | A | B |
| Example 11 | Nitrocellulose resin | 5.0 | 180 | 3 | None | B | B |
| Comparative Example 1 | Acryl polyol + isocyanate | 5.0 | 4 | 3 | None | C | B |
| Comparative Example 2 | - | - | - | 3 | None | A | C |

The transfer sheets of Examples 1 to 11, in which thermoplastic resins were used for the uneven layer, all had good peelability. In particular, for the decorative molded articles of Examples 1 to 5, the gloss difference in the surface was clear and the design decorativeness was good. The design decorativeness of the decorative molded articles of Examples 6 to 11 was inferior to that of Examples 1 to 5, but was not a problem in use.

On the other hand, the transfer sheet of Comparative Example 1, which used the thermosetting resin for the uneven layer, had poor peelability. In addition, since the pattern profile of the uneven layer part was confirmed to be disrupted due to curing shrinkage, the design decorativeness was evaluated to be poor.

### Reference Signs List

10 Transfer Sheet
20 Release Sheet
22 Substrate
24 Uneven Layer
26 Release Layer
30 Transfer Layer
32 Protective Layer
34 Primer Layer
36 Print Layer
38 Adhesive Layer
40 Decorative Molded Article
42 Adherends

## Claims

1. A transfer sheet (10) comprising a transfer layer (30) on a release sheet (20),
wherein the release sheet (20) comprises:
a substrate (22);
an uneven layer (24) provided on a portion of one surface of the substrate and containing a matting agent and a binder resin comprising a thermoplastic resin, wherein the uneven layer (24) contains the matting agent in an amount of 50 parts by mass or more and 180 parts by mass or less based on 100 parts by mass of the binder resin, and wherein the proportion of the thermoplastic resin in the binder resin is 95% or more; and
a release layer (26) provided on the uneven layer (24) and on a portion of the substrate where the uneven layer is not formed.

2. The transfer sheet (10) according to claim 1, wherein the release layer (26) and the transfer layer (30) are in contact with each other.

3. The transfer sheet (10) according to claim 1 or 2, wherein the matting agent has an average particle size of 0.5 µm or more and 20 µm or less.

4. The transfer sheet (10) according to any one of claims 1 to 3, wherein the release layer (26) has a thickness of 0.5 µm or more and 50 µm or less.

5. The transfer sheet according to any one of claims 1 to 4, wherein the release layer (26) comprises at least one of a cured product of a thermosetting resin composition and a cured product of an ionizing radiation curable resin composition.

6. The transfer sheet (10) according to any one of claims 1 to 5, wherein the release layer (26) contains a matting agent having an average particle size of 0.5 µm or more and 60µm or less, and an amount of the matting agent in the release layer (26) is 0.1 parts by mass or more and 10 parts by mass or less based on 100 parts by mass of the resin component of the release layer (26).

7. The transfer sheet (10) according to any one of claims 1 to 6, wherein the thermoplastic resin is selected from the group consisting of the acrylic resin and the cellulose resin.

8. A method for producing a decorative molded article (40), comprising:
adhering the transfer layer (30) of the transfer sheet (10) according to any one of claims 1 to 7 to an adherend (42), thereby laminating the transfer sheet (10) on the adherend (42); and
peeling off the release sheet (20) of the transfer sheet (10) to transfer the transfer layer (30) on the adherend (42).

## Patentansprüche

1. Transferfolie (10), umfassend eine Transferschicht (30) auf einer Abziehfolie (20),
wobei die Abziehfolie (20) umfasst:
ein Substrat (22),
eine unregelmäßige Schicht (24), die auf einem Abschnitt einer Oberfläche des Substrats bereitgestellt wird und ein Mattierungsmittel und ein Bindeharz, das ein thermoplastisches Harz umfasst, enthält, wobei die unregelmäßige Schicht (24) das Mattierungsmittel in einer Menge von 50 Masseteilen oder mehr und 180 Masseteilen oder weniger basierend auf 100 Masseteilen des Bindeharzes enthält, und wobei der Anteil des thermoplastischen Harzes in dem Bindeharz 95 % oder mehr beträgt; und
eine Abziehschicht (26), die auf der unregelmäßigen Schicht (24) und auf einem Abschnitt des Substrats, in dem die unregelmäßige Schicht nicht gebildet ist, bereitgestellt wird.

2. Transferfolie (10) nach Anspruch 1, wobei die Abziehschicht (26) und die Transferschicht (30) in Kontakt miteinander stehen.

3. Transferfolie (10) nach Anspruch 1 oder 2, wobei das Mattierungsmittel eine durchschnittliche Partikelgröße von 0,5 µm oder mehr und 20 µm oder weniger aufweist.

4. Transferfolie (10) nach einem der Ansprüche 1 bis 3, wobei die Abziehschicht (26) eine Dicke von 0,5 µm oder mehr und 50 µm oder weniger aufweist.

5. Transferfolie nach einem der Ansprüche 1 bis 4, wobei die Abziehschicht (26) mindestens eines von einem gehärteten Produkt aus einer wärmehärtenden Harzzusammensetzung oder einem ausgehärteten Produkt aus einer mit ionisierender Strahlung aushärtbaren Harzzusammensetzung umfasst.

6. Transferfolie nach einem der Ansprüche 1 bis 5, wobei die Abziehschicht (26) ein Mattierungsmittel enthält, das eine durchschnittliche Partikelgröße von 0,5 µm oder mehr und 60 µm oder weniger aufweist, und eine Menge des Mattierungsmittels in der Abziehschicht (26) 0,1 Masseteile oder mehr und 10 Masseteile oder weniger basierend auf 100 Masseteilen der Harzzusammensetzung der Abziehschicht (26) beträgt.

7. Transferfolie nach einem der Ansprüche 1 bis 6, wobei die Abziehschicht aus der Gruppe ausgewählt wird, die aus Acrylharz und Zellulose-Harz besteht.

8. Verfahren zum Erzeugen eines dekorativen Formartikels (40), umfassend:
Kleben der Transferschicht (30) der Transferfolie (10) nach einem der Ansprüche 1 bis 7 auf ein Klebemittel (42), wodurch die Transferfolie (10) auf das Klebemittel (42) laminiert wird; und
Abziehen der Abziehschicht (20) der Transferfolie (10), um die Transferschicht (30) auf das Klebemittel (42) zu übertragen.

## Revendications

1. Feuille de transfert (10), comprenant une couche de transfert (30) sur une feuille détachable (20),
dans laquelle la feuille détachable (20) comprend :
un substrat (22) ;
une couche irrégulière (24) fournie sur une partie d'une surface du substrat et contenant un agent matifiant et une résine liante comprenant une résine thermoplastique, dans laquelle la couche irrégulière (24) contient l'agent matifiant en une quantité de 50 parties en masse ou plus et de 180 parties en masse ou moins sur la base de 100 parties en masse de la résine liante, et dans laquelle la proportion de la résine thermoplastique dans la résine liante est de 95 % ou plus ; et
une couche détachable (26) fournie sur la couche irrégulière (24) et sur une partie du substrat dans laquelle la couche irrégulière n'est pas formée.

2. Feuille de transfert (10) selon la revendication 1, dans laquelle la couche détachable (26) et la couche de transfert (30) sont en contact l'une avec l'autre.

3. Feuille de transfert (10) selon la revendication 1 ou 2, dans laquelle l'agent matifiant présente une taille de particule moyenne de 0,5 µm ou plus et de 20 µm ou moins.

4. Feuille de transfert (10) selon l'une quelconque des revendications 1 à 3, dans laquelle la couche détachable (26) présente une épaisseur de 0,5 µm ou plus et de 50 µm ou moins.

5. Feuille de transfert selon l'une quelconque des revendications 1 à 4, dans laquelle la couche détachable (26) comprend au moins l'un d'un produit durci d'une composition de résine thermodurcissable et d'un produit durci d'une composition de résine durcissable par rayonnement ionisant.

6. Feuille de transfert (10) selon l'une quelconque des revendications 1 à 5, dans laquelle la couche détachable (26) contient un agent matifiant ayant une taille de particule moyenne de 0,5 µm ou plus et de 60 µm ou moins, et une quantité de l'agent matifiant dans la couche détachable (26) est de 0,1 partie en masse ou plus et de 10 parties en masse ou moins sur la base de 100 parties en masse du composant de résine de la couche détachable (26).

7. Feuille de transfert (10) selon l'une quelconque des revendications 1 à 6, dans laquelle la résine thermoplastique est sélectionnée dans le groupe composé de la résine acrylique et de la résine de cellulose.

8. Procédé permettant de produire un article moulé décoratif (40), comprenant les étapes consistant à :
faire adhérer la couche de transfert (30) de la feuille de transfert (10) selon l'une quelconque des revendications 1 à 7 à un adhésif (42) de manière à laminer la feuille de transfert (10) sur l'adhésif (42) ; et
décoller la feuille détachable (20) de la feuille de transfert (10) pour transférer la couche de transfert (30) sur l'adhésif (42).
